# EUROPÄISCHE PATENTSCHRIFT

(11) **EP 4 207 839 B1**
(45) Veröffentlichungstag und Bekanntmachung des Hinweises auf die Patenterteilung: **19.03.2025**
(21) Anmeldenummer: 22207172.2
(22) Anmeldetag: 14.11.2022
(51) Int. Cl.: H04W 4/80, A41D 1/00, H04W 4/90, H04W 52/00

(54) **SCHUTZAUSRÜSTUNG FÜR RETTUNGSKRÄFTE**
PROTECTIVE EQUIPMENT FOR RESCUE HOISTS
EQUIPEMENT DE PROTECTION POUR LES FORCES DE SAUVETAGE

(30) Priorität: 08.12.2021 DE 202021106673 U
(43) Veröffentlichungstag der Anmeldung: 05.07.2023
(73) Patentinhaber: tagltron GmbH, 33154 Salzkotten (DE)
(72) Erfinder: Wendisch, Jan, 33154 Salzkotten (DE)
(74) Vertreter: Ostermann, Thomas

(56) Entgegenhaltungen:
- GB-A- 2 585 083
- GB-A- 2 593 949
- US-A1- 2018 338 561
- US-A1- 2020 285 821

## Beschreibung

Die Erfindung betrifft ein Bekleidungsstück nach dem Oberbegriff des Patentanspruchs 1.

Ferner betrifft die Erfindung ein System zur Verarbeitung von Informationssignalen.

Aus der DE 10 2015 100 852 A1 ist ein Bekleidungsstück für Rettungskräfte bekannt, in dem mehrere Kommunikationseinheiten integriert sind. Zum einen sind am Ende von Ärmelteilen des Bekleidungsstücks erste Kommunikationseinheiten zum Senden von Informationssignalen angeordnet. Zum anderen ist in einem Rumpfteil des Bekleidungsstücks eine zweite Kommunikationseinheit zum Empfangen von den ersten Kommunikationseinheiten erzeugten Informationssignals angeordnet. Die empfangene zweite Kommunikationseinheit ist über Kabelstränge mit einer Mehrzahl von außen an dem Bekleidungsstück angebrachten Leuchtdioden verbunden. Der Kabelstrang ist zusätzlich mit einer Ansteuereinheit für die Leuchtdioden sowie einer Energieversorgungseinheit verbunden. Die erste Kommunikationseinheit und die zweite Kommunikationseinheit können jeweils als Transponder ausgebildet sein. Ein Schaltsignal zum Ein- und Ausschalten der Leuchtdioden wird durch Veränderung der relativen Lage der ersten Kommunikationseinheit zu der zweiten Kommunikationseinheit erzeugt. Die Leuchtdioden werden beispielsweise eingeschaltet, wenn ein vorgegebener Schwellwert, der abhängig ist von dem Abstand der ersten und zweiten Kommunikationseinheit zueinander, unterschritten wird. Statt eines physikalischen Kontaktes führt somit die Annäherung des Armteils zu dem Rumpfteil nach Art eines Näherungsschalters zu dem gewünschten Schaltvorgang. Auf diese Weise kann die das Bekleidungsstück tragende Person beispielsweise ein Leuchtsignal abgeben, wenn ein Arm zu dem Rumpf bewegt wird. Dies ist insbesondere dann sinnvoll, wenn die Person, beispielsweise eine Rettungskraft, am Unfallort mit Rettungsmaßnahmen befasst ist und keine Hand für die Betätigung eines Schalters zur Verfügung hat. Nachteilig an dem bekannten Bekleidungsstück ist jedoch, dass der Aufwand relativ groß ist, insbesondere ist eine Energieversorgungseinheit erforderlich, die zusätzliches Gewicht bedeutet.

Transponder zur drahtlosen Bereitstellung von Informationen von Parametern eines Objektes sind beispielsweise aus der WO 2020/205484 A1 bekannt. Der Transponder ist zusammen mit einem Sensor verbaut, der über keine eigene Energieversorgung verfügt. Die erforderliche Energie wird über ein RFID-Feld eines in der Nähe angeordneten RFID-Lesegerätes bereitgestellt. Nachteilig hieran ist, dass sich das Objekt stets innerhalb des RFID-Feldes bewegen muss. Befindet es sich außerhalb der Reichweite des RFID-Lesegerätes, kann keine Übertragung eines Informationssignales erfolgen.

Aus der US 2020/0285821 A1 ist ein Bekleidungsstück mit einer Kommunikationseinheit zur Bereitstellung eines Informationssignals bekannt. Zur Speisung der Kommunikationseinheit weist das Bekleidungsstück eine Energieumwandlungseinheit auf.

Aus der US 2018/338561 A1 ist als Bekleidungsstück einen Schuh bekannt, in dem eine erste Kommunikationseinheit in Form eines RFID-Chips integriert ist. Eine Energieumwandlungseinheit zur Bereitstellung von elektrischer Energie für die erste Kommunikationseinheit kann durch Bewegung des den Schuh tragenden Körpers erzeugt werden.

Aus der GB 2 593 949 A ist ein Bewegungsenergiewandler bekannt, der die Energie bereitstellt zur Erzeugung eines kennzeichnenden Informationssignals.

Aufgabe der vorliegenden Erfindung ist es, als Objekt ein Bekleidungsstück für Rettungskräfte bzw. ein flächiges Datenelement für dasselbe derart weiterzubilden, dass langzeitstabil Informationssignale drahtlos von einem Objekt auf ein anderes Objekt übertragen werden kann, wobei eine einfache Handhabung und ein geringes Gewicht gewährleistet ist.

Zur Lösung dieser Aufgabe weist die Erfindung die Merkmale des Patentanspruchs 1 auf.

Nach der Erfindung ist eine Energieumwandlungseinheit in dem Objekt integriert angeordnet, in dem sich eine erste Kommunikationseinheit befindet. Die Energieumwandlungseinheit speist die für den Betrieb der ersten Kommunikationseinheit und/oder für die Übertragung eines von demselben drahtlos abgesendeten Informationssignals an eine ortsfern angeordnete zweite Kommunikationseinheit aus der Umgebung und/oder durch Bewegung von Teilen des Objekts selbst. Vorteilhaft weist die erste Kommunikationseinheit ein relativ geringes Gewicht auf und kann einfach an dem Objekt, insbesondere dem Bekleidungsstück, angebracht werden. Nach der Erfindung ist die Energieumwandlungseinheit als ein Bewegungsenergiewandler ausgebildet. Vorteilhaft kann durch Bewegung eines Teils des Objekts bzw. des Bekleidungsstücks eine Kraft auf den Bewegungsenergiewandler ausgeübt werden, die zu einer Umwandlung der Bewegungsenergie in elektrische Energie führt. Die gewonnene elektrische Energie kann zur Speisung der ersten Kommunikationseinheit und zur Übertragung eines durch die erste Kommunikationseinheit erzeugten Informationssignals dienen,

Nach der Erfindung ist der Bewegungsenergiewandler in einem Beugungsbereich des Bekleidungsstücks, nämlich im Bereich der Armbeuge oder der Beinbeuge, angeordnet, so dass durch Beugen des Arms oder des Beins des Benutzers des Bekleidungsstücks die erforderliche mechanische Energie zur Umwandlung in die elektrische Energie erzeugt werden kann. Vorteilhaft kann hierdurch auf einfache Weise beispielsweise ein Notsignal als Informationssignal von der ersten Kommunikationseinheit zu der ortsfern angeordneten zweiten Kommunikationseinheit übertragen werden. Wenn die zweite Kommunikationseinheit in einer mobilen dezentralen Leitstelle am Unfallort integriert ist, können von der Leitstelle schnell Einsatzbefehle in Abhängigkeit von dem aktuellen Informationssignal erteilt werden. Diese können vorzugsweise über einen anderen Kommunikationskanal an denselben Nutzer und/oder an weiteren Nutzer desselben Bekleidungsstücks gerichtet sein. Wenn beispielsweise an der Unfallstelle zusätzlich unerwartet ein Feuer ausbricht, kann dies schnell über das Informationssignal an die dezentrale Leitstelle berichtet werden, die dann schnell die weiteren Einsatzbefehle erteilen kann.

Nach einer Weiterbildung der Erfindung weist die Energieumwandlungseinheit einen Sensor auf zur Detektion einer physikalischen Größe oder ist mit einer Sensoreinheit gekoppelt. Beispielsweise kann hierdurch ein Kohlenmonoxidgehalt der Luft gemessen werden und über die erste Kommunikationseinheit an die ortsfern angeordnete zweite Kommunikationseinheit übertragen werden. Die dezentrale Leitstelle am Unfallort kann dann relativ schnell entsprechende Einsatzbefehle für Rettungsmaßnahmen erteilen.

Nach der Erfindung ist eine Steuereinheit zur Erzeugung des Informationssignals mit der ersten Kommunikationseinheit und/oder der Energieumwandlungseinheit gekoppelt und/oder elektrisch verbunden. So weisst die Steuereinheit eine Totmann-Signal-Ansteuerung auf, so dass bei Bewegung der Armbeuge und/oder der Beinbeuge durch den Nutzer ein Totmann-Signal als Informationssignal erzeugt wird, das über die Funkschnittstelle an die zweite Kommunikationseinheit übertragen wird. Vorteilhaft braucht hierdurch der Benutzer keinen Schalter betätigen Zusätzlich kann die Steuereinheit eine Parameterüberwachungsansteuerung, beispielsweise eine Temperaturüberwachungsansteuerung, aufweisen, so dass die von dem Sensor ermittelte physikalische Größe bzw. physikalischer Parameter kontinuierlich oder in regelmäßigen Abständen an die zweite Kommunikationseinheit übertragen werden kann. In Abhängigkeit von der Anzahl und von dem Typ der eingesetzten Sensoren kann somit eine Dauerüberwachung an dem Einsatzort erfolgen.

Nach einer Weiterbildung der Erfindung weist die zweite Kommunikationseinheit, die vorzugsweise ortsfern zu der ersten Kommunikationseinheit angeordnet ist, eine Auswerteeinheit auf, mittels derer das Informationssignal ausgewertet und in Abhängigkeit von der Auswertung ein Befehlssignal erzeugt wird, das über eine gesonderte drahtlose Schnittstelle an ein weiteres Kommunikationsgerät desselben Benutzers des Objektes und/oder weiterer Nutzer anderer Objekte übertragen wird. Beispielsweise kann das Befehlssignal von einer dezentralen Leitstelle am Unfallort erfolgen, um den Nutzern der Bekleidungsstücke den Befehl zu erteilen, wegen Gefahr in Verzug sich sofort von der Unfallstelle zu entfernen.

Nach einer bevorzugten Ausführungsform der Erfindung weist weder die Energieumwandlungseinheit noch die erste Kommunikationseinheit eine Batterie oder einen Akkumulator auf. Die erfindungsgemäße Vorrichtung weist somit keinen eigenen Energiespeicher auf. Die Energie wird ausschließlich über an dem Einsatzort vorhandene Energiequellen erzeugt.

Nach einer alternativen Ausführungsform der Erfindung weist die Energieumwandlungseinheit einen elektrischen Zwischenspeicher, bzw. eine elektrische Hilfsenergiequelle auf, so dass vorteilhaft hierdurch ein Dauerbetrieb der ersten Kommunikationseinheit ermöglicht wird, auch wenn die an dem Einsatzort erforderliche Energiequelle nicht bereitsteht. Insbesondere kann hierdurch eine Übertragung von der ersten Kommunikationseinheit erfolgen, wenn sich der Nutzer des Bekleidungsstücks sich in einem regungslosen Zustand befindet und nicht mehr in der Lage ist, seine Arme oder Beine zu beugen.

Nach einer Weiterbildung der Erfindung ist die Energieumwandlungseinheit und/oder die erste Kommunikationseinheit und/oder die Steuereinheit auf einer textilen Tragschicht angeordnet, die an einer Oberfläche oder innerhalb eines mehrschichtigen Textilmaterials des Bekleidungsstücks verläuft. Vorteilhaft sind die Einheiten hierdurch fest und unverlierbar an dem Bekleidungsstück angeordnet. Wenn die Einheiten zusätzlich innerhalb des mehrschichtigen Textilmaterials des Bekleidungsstücks angeordnet sind, sind sie darüber hinaus auch vor Umwelteinflüssen geschützt.

Nach einer Weiterbildung der Erfindung ist die erste Kommunikationseinheit und die zweite Kommunikationseinheit jeweils als ein RFID-Transponder ausgebildet. Die erste Kommunikationseinheit wird mit elektrischer Energie der Energieumwandlungseinheit gespeist.

Zur Lösung der Aufgabe weist das erfindungsgemäße System die Merkmale des Patentanspruchs 7 auf.

Ausführungsbeispiele der Erfindung werden nachfolgend anhand der Zeichnungen näher erläutert.

Es zeigen:
- Figur 1: eine schematische Darstellung eines erfindungsgemäßen Systems,
- Figur 2: eine schematische Vorderansicht eines Bekleidungsstücks und
- Figur 3: einen Querschnitt durch das Bekleidungsstück.

Ein erfindungsgemäßes System zur Übertragung und Verarbeitung eines Informationssignals 5 von einem ersten Objekt 1 zu einem zweiten Objekt 2 und vice versa weist eine erste Kommunikationseinheit 3 auf, die dem ersten Objekt 1 zugeordnet ist, und eine zweite Kommunikationseinheit 4 auf, die dem zweiten Objekt 2 zugeordnet ist.

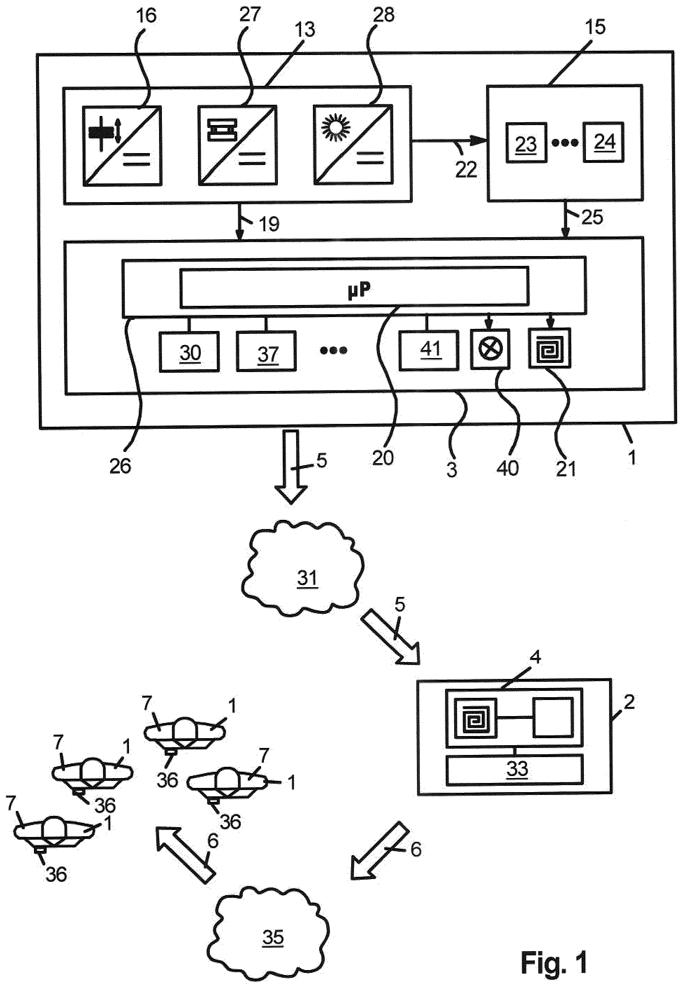

Im vorliegenden Ausführungsbeispiel ist das erste Objekt 1 als ein Bekleidungsstück, beispielsweise als Teil einer persönlichen Schutzausrüstung für Rettungskräfte, ausgebildet, das von einer Person 7, beispielsweise Rettungskraft, Feuerwehrmann, Polizist, getragen wird (in Figur 1 von oben dargestellt).

Das zweite Objekt 2 kann als eine dezentrale Leitstelle 2 ausgebildet sein, die an einem Unfallort temporär, vorzugsweise für den Einsatzzweck, angeordnet ist. Die dezentrale Leitstelle 2 kann beispielsweise zur Abwicklung eines Katastrophen- oder Großschadensfalls dienen, wobei Einsatzkräfte 7 in einem Einsatzgebiet koordiniert werden. Die Einsatzkräfte 7 tragen jeweils das Bekleidungsstück, das als erstes Objekt 1 dieses Systems zur Abwicklung des Katastrophen- oder Großschadensfalls dient. Die dezentrale Leitstelle 2 ist dazu ausgerichtet, Informationssignale 5 von den jeweiligen Einsatzkräften 7 zu erhalten, zu verarbeiten und Einsatzsignale 6 an die Einsatzkräfte 7 auszugeben. Die Einsatzkräfte 7 tragen jeweils das Bekleidungsstück 1, das im vorliegenden Ausführungsbeispiel als Jacke ausgebildet ist. Das Bekleidungsstück 1 weist einen Rumpfteil 8, einen Kragenausschnitt 9 sowie zwei Armteile 10 auf. Im vorliegenden Ausführungsbeispiel ist im Bereich einer Armbeuge 11 des Armteils 10 ein flächiges Datenelement 12 angeordnet bzw. unverlierbar mit dem Bekleidungsstück 1 verbunden. Das flächige Datenelement 12 ist als ein integriertes Bauteil ausgebildet, das eine Energieumwandlungseinheit 13, die erste Kommunikationseinheit 3 sowie gegebenenfalls zusätzlich eine Sensoreinheit 15 aufweist.

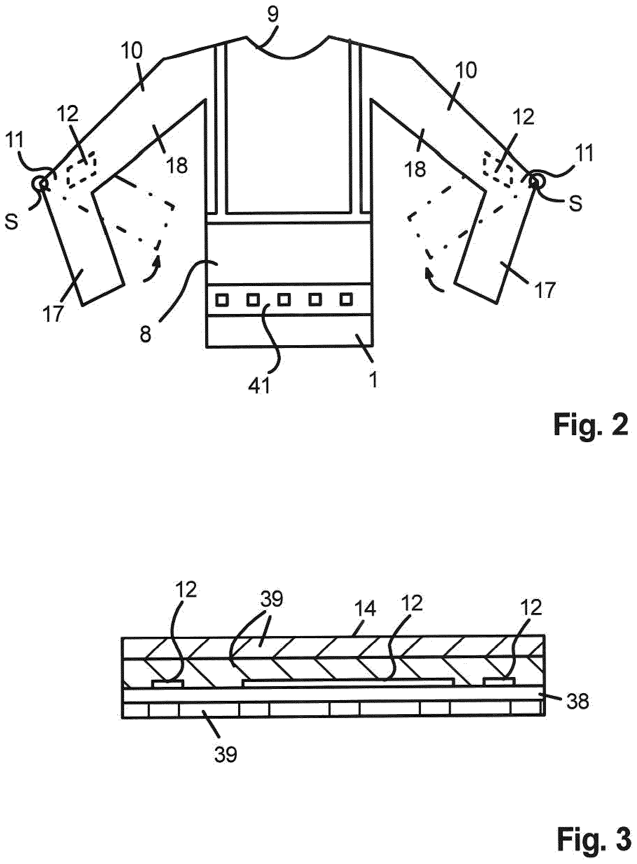

Die Energieumwandlungseinheit 13 weisst eine oder mehrere Energieumwandler auf. Im vorliegenden Ausführungsbeispiel umfasst die Energieumwandlungseinheit 13 einen ersten Energieumwandler, der als ein Bewegungsenergiewandler 16 ausgebildet ist. Der Bewegungsenergiewandler 16 ist dazu ausgelegt, mechanische Energie in elektrische Energie umzuwandeln. Beispielseise kann der Bewegungsenergiewandler 16 ein Piezoelement aufweisen. Damit ein mechanischer Druck ausgeübt werden kann, ist der Bewegungsenergiewandler 16 in einem Schenkelbereich der Armbeuge 11 angeordnet, so dass bei Bewegen eines Unterabschnitts 17 des Armteils 10 relativ zu einem Oberabschnitt 18 desselben Armteils 10 eine mechanische Kraft auf den Bewegungsenergiewandler 16 bzw. Piezoelement ausgeübt wird, die in elektrische Energie umgewandelt wird. Der Bewegungsenergiewandler 16 befindet sich in einem zu einer Schwenkachse S des Armteils 10 nahen Bereich. Durch Beugen des Armes der Person 7 bzw. der hierdurch bewirkten Bewegung der Abschnitte 17, 18 der jeweiligen Armteile 10 zueinander hin kann die elektrische Energie erzeugt werden, die als Stromspeisesignal 19 an die erste Kommunikationseinheit 3 übertragen wird, s. gestrichelte Linie des Unterabschnitts 17 in Figur 2.

Die erste Kommunikationseinheit 3 weist beispielsweise einen passiven Transponder auf mit einem Mikrokontroller 20 und einer Antenne 21.

Wenn das System die Sensoreinheit 15 aufweist, speist die Energieumwandlungseinheit 13 zusätzlich mit einem Stromspeisesignal 22 die Sensoreinheit 15. Die Sensoreinheit 15 kann eine Anzahl von Sensoren 23, 24 aufweisen, mittels derer jeweils unterschiedliche physikalische Größen detektiert werden können. Der eine Sensor 23 kann beispielsweise die Umgebungstemperatur zu dem Bekleidungsstück 1 an dem Einsatzort messen. Der weitere Sensor 24 kann beispielsweise als ein Kohlenmonoxidsensor ausgebildet sein, der den Kohlenmonoxidgehalt der Umgebungsluft des Bekleidungsstücks 1 misst. Die Sensoren 23, 24 erzeugen jeweils Signale, die als Sensorsignal 25 an eine vorzugsweise in der ersten Kommunikationseinheit 3 integrierten Steuereinheit 26 übertragen wird. Die Steuereinheit 26 kann den Mikrokontroller 20 aufweisen, der von der Energieumwandlungseinheit 13 mit dem Stromspeisesignal 19 gespeist wird.

Die Steuereinheit 6, die erste Kommunikationseinheit 3, die Sensoreinheit 15 und die Energieumwandlungseinheit 13 sind vorzugsweise in einem gemeinsamen Bauteil, nämlich dem flächigen Datenelement 12, angeordnet. Alternativ können alle oder ein Teil der vorgenenannten Einheiten 3, 6, 13, 15 auch einzeln in dem Bekleidungsstück 1 integriert sein, wobei sichergestellt ist, dass die Einheiten 3, 6, 13, 15 über elektrische Verbindungsleitungen miteinander gekoppelt sind.

Die Energieumwandlungseinheit 13 kann alternativ oder zusätzlich einen Thermoenergiewandler 27 aufweisen, mittels dessen thermische Energie in elektrische Energie umgewandelt werden kann. Beispielsweise umfasst der Thermoenergiewandler 27 ein Peltierelement. Auf diese Weise kann beispielsweise bei einer Temperaturerhöhung am Einsatzort das Stromspeisesignal 19 bzw. 22 erzeugt werden.

Alternativ oder zusätzlich kann die Energieumwandlungseinheit 13 einen Strahlungsenergiewandler 28 aufweisen, der Strahlungsenergie der Umgebung in elektrische Energie umwandelt. Beispielsweise kann der Strahlungsenergiewandler 28 eine Solarzelle umfassen.

Eine vorzugsweise in dem Mikrokontroller 20 integrierte Steuereinheit 29 dient zur Verarbeitung der von der Energieumwandlungseinheit 13 und/oder der Sensoreinheit 15 bereitgestellten Signalen 19, 25.

Die Steuereinheit 29 umfasst eine Totmannsignalansteuerung 30, mittels derer das Informationssignal 5 als ein Totmannsignal ausgebildet ist und von der Antenne 21 über eine Funkschnittstelle 31 an ein ortsfern angeordnetes zweite Kommunikationseinheit 4 der dezentralen Leitstelle 2 übertragen wird. Das Totmannsignal 5 wird unter Nutzung des Bewegungsenergiewandlers 16 dann erzeugt, wenn das durch die Bewegung der Armbeugen 11 erzeugte Stromspeisesignal 19 einen vorgegebenen Schwellwert übersteigt. Der vorgegebene Schwellwert ist in der Steuereinheit 26 gespeichert. Bei Überschreiten des Schwellwertes wird das Totmannsignal 5 erzeugt und über die Funkschnittstelle 31 an die zweite Kommunikationseinheit 4 übertragen. Die zweite Kommunikationseinheit 4 der Leitstelle ist mit einer Auswerteeinheit 33 verbunden, in der das Informationssignal 5 ausgewertet wird. In Abhängigkeit von dem Ergebnis der Auswertung erfolgt die Erzeugung des Einsatzsignals bzw. Befehlssignals 6, das über eine gesonderte drahtlose Funkschnittstelle 35 an Kommunikationsgeräten 36 einer oder mehrerer das Bekleidungsstück 1 tragenden Personen/Einsatzkräften 7 derselben Organisationseinheit übertragen wird. Beispielsweise kann es sich bei dem Befehlssignal 6 um einen Einsatzbefehl zum Entfernen der Einsatzkräfte 7 von der Unfallstelle handeln.

Zusätzlich kann die Steuereinheit 26 eine Parameterüberwachungsansteuerung 37 aufweisen, mittels derer beispielsweise durch die Sensoreinheit 15 detektierter Parameter überwacht werden können. Wenn es bei dem Parameter beispielsweise um eine Temperatur handelt, kann auf diese Weise in regelmäßigen Abständen bzw. kontinuierlich die Temperatur in der Umgebung der jeweiligen Einsatzkräfte 7 überwacht werden. Die aktuellen Temperaturen werden als Sensorsignal 25 der Parameterüberwachungsansteuerung 37 der Steuereinheit 26 zur Verfügung gestellt und dann über die Antenne 21 als Informationssignal 5 der zweiten Kommunikationseinheit 4 der Leitstelle 2 übertragen. Die Auswerteeinheit 33 der Leitstelle 2 weist Verarbeitungs- und Speichermittel auf, um die entsprechenden Informationssignale 5 zu verarbeiten und abzuspeichern. Auf diese Weise kann eine Dokumentation der Temperatur bzw. anderer Parameter während des Einsatzes erfolgen.

Im vorliegenden Ausführungsbeispiel ist zur Speisung der Sensoreinheit 15 und der ersten Kommunikationseinheit 3 bzw. der Steuereinheit 26 keine Batterie oder kein Akkumulator erforderlich. Die elektrische Energie wird allein durch die Energieumwandlungseinheit 13 erzeugt.

Nach einer nicht dargestellten alternativen Ausführungsform der Erfindung kann der Steuereinheit 26 ein elektrischer Zwischenspeicher zugeordnet werden, mittels dessen eine elektrische Hilfsenergie bereitgestellt wird. Auf diese Weise kann ein zeitweiser Ausfall der Energieumwandlungseinheit 13, beispielsweise bei Nichtvorliegen einer erforderlichen physikalischen Energiequelle, ausgeglichen werden. Insbesondere kann hierdurch ein Dauerbetrieb des Systems sichergestellt werden.

Der elektrische Zwischenspeicher kann beispielsweise als ein Kondensator ausgebildet sein, der in der Schaltungselektronik der Steuereinheit bzw. des Mikroprozessors integriert ist.

Die Energieumwandlungseinheit 13 und/oder die erste Kommunikationseinheit 3 und gegebenenfalls die Sensoreinheit 15 können auf einer gemeinsamen textilen Trägerschicht 38 angeordnet sein. Die textile Trägerschicht 38 ist im vorliegenden Ausführungsbeispiel innerhalb eines aus mehreren Schichten 39 bestehenden Textilmaterials eingearbeitet. Die textile Trägerschicht 38 kann mittels Weben oder Nähen oder durch Einwirken oder durch Einsticken oder durch Drucken mit dem Textilmaterial 39 des Bekleidungsstücks 1 fest verbunden sein.

Die Energieumwandlungseinheit 13 und/oder die erste Kommunikationseinheit 3 und/oder die Sensoreinheit 15 kann flexibel oder starr oder semistarr ausgebildet sein.

Nach einer nicht dargestellten alternativen Ausführungsform der Erfindung kann die Energieumwandlungseinheit 13 und/oder die erste Kontaktierungseinheit 3 und/oder die Sensoreinheit 15 auf einer Oberfläche 14 des Textilmaterials des Bekleidungsstücks 1 angebracht sein. Insbesondere wenn die Energieumwandlungseinheit 13 einen Strahlungsenergiewandler 28 umfasst, müsste zumindest dieser an der Oberfläche oder mit einem lichttransparenten Fenster angeordnet sein.

Nach einer alternativen Ausführungsform der Erfindung kann die Steuereinheit 26 eine an dem Bekleidungsstück 1 angebrachte Lichtquelleneinheit 40 ansteuern. Hierzu weist die Steuereinheit 26 eine entsprechende Ansteuereinheit 41 auf, die von der Energieumwandlungseinheit 13 mit dem Stromspeisesignal 19 betrieben wird. In diesem Fall ist die Steuereinheit 26 unabhängig von der ersten Kommunikationseinheit 3 betreibbar bzw. die erste Kommunikationseinheit 3 wird hierbei nicht betrieben. Die Lichtquelleneinheit 40 kann beispielsweise als ein Leuchtstreifen 41 an dem Rumpfteil 8 befestigt sein, s. Figur 2.

Nach einer nicht dargestellten Ausführungsform der Erfindung kann die Steuereinheit 26 auch außerhalb der ersten Kommunikationseinheit 3 angeordnet sein. Sie erhält von der Energieumwandlungseinheit 13 das Stromspeisesignal 19 und/oder von der Sensoreinheit 15 das Sensorsignal 25. Ausgangsseitig werden von der Steuereinheit 26 die erste Kommunikationseinheit 3 und/oder die Lichtquelleneinheit 40 angesteuert. Die jeweiligen Ansteuerungen 30, 37 sind Bestandteil der Steuereinheit 26.

## Patentansprüche

1. Bekleidungsstück für Rettungskräfte (7), mit einer in und/oder an dem Bekleidungsstück (1) angebrachten ersten Kommunikationseinheit (3) zur Bereitstellung eines Informationssignals (5), dass in und/oder an dem Bekleidungsstück (1) eine Energieumwandlungseinheit (13) angeordnet ist, die mechanische Energie in elektrische Energie umwandelt zur Speisung der ersten Kommunikationseinheit (3), dass die Energieumwandlungseinheit (13) einen Bewegungsenergiewandler (16) aufweist zur Umwandlung der mechanischen Energie in die elektrische Energie, wobei der Bewegungsenergiewandler (16) in einem Beugungsbereich (11) des Bekleidungsstücks (1) angeordnet ist, so dass durch Bewegung eines den Beugungsbereich (11) enthaltenen Abschnitts (17, 18) des Bekleidungsstücks (1) die mechanische Energie erzeugt wird, wobei der Bewegungsenergiewandler (16) in einem Bereich einer Armbeuge oder einer Beinbeuge angeordnet ist, so dass durch Beugen des Armes oder des Beines der Rettungskraft des Bekleidungsstücks die erforderliche mechanische Energie zur Umwandlung in die elektrische Energie erzeugt werden kann, und dass die erste Kommunikationseinheit (3) eine Steuereinheit (29) mit einer Totmannsignalansteuerung (30) aufweist, mittels derer das Informationssignal (5) als ein Totmannsignal ausgebildet ist und von der Antenne (21) über eine Funkschnittstelle (31) an eine ortsfern angeordnete zweite Kommunikationseinheit (4) einer Leitstelle (2) übertragen wird, wobei das Totmannsignal (5) erzeugt wird, wenn das durch die Bewegung der Armbeugen (11) bzw. Beinbeugen erzeugte Stromspeisesignal (19) einen in der Steuereinheit (26) gespeicherten Schwellwert übersteigt.

2. Bekleidungsstück nach Anspruch 1, **dadurch gekennzeichnet, dass** der Energieumwandlungseinheit (13) eine Sensoreinheit (15) zugeordnet ist zur Detektion einer physikalischen Größe, wobei die Sensoreinheit (15) mindestens einen Umgebungssensor (23, 24) zur Detektion von Zustandsparametern einer Umgebung des Bekleidungsstücks (1) aufweist, und dass die Sensoreinheit (15) durch ein von der Energieumwandlungseinheit (13) erzeugtes Stromspeisesignal (19) gespeist wird.

3. Bekleidungsstück nach Anspruch 1 oder 2, **dadurch gekennzeichnet, dass** weder die Energieumwandlungseinheit (13) noch die erste Kommunikationseinheit (3) eine Batterie oder einen Akkumulator als elektrischen Energiespeicher aufweist.

4. Bekleidungsstück nach einem der Ansprüche 1 bis 3, **dadurch gekennzeichnet, dass** die Energieumwandlungseinheit (13) und/oder die Steuereinheit (26) und/oder die erste Kommunikationseinheit (3) einen elektrischen Zwischenspeicher aufweist, mittels dessen eine elektrische Hilfsenergie bereitgestellt wird für einen zeitweisen Ausfall des Energiewandlers (16, 27, 28).

5. Bekleidungsstück nach Anspruch 4, **dadurch gekennzeichnet, dass** der elektrische Zwischenspeicher als ein Kondensator ausgebildet ist.

6. Bekleidungsstück nach einem der Ansprüche 1 bis 5, **dadurch gekennzeichnet, dass** die Energieumwandlungseinheit (13) und/oder die erste Kommunikationseinheit (3) und/oder die Sensoreinheit (15) und/oder die Steuereinheit (26) auf einer textilen Trägerschicht (38) des Bekleidungsstücks (1) angebracht ist, wobei die textile Trägerschicht (38) an einer Oberfläche (14) und/oder innerhalb eines mehrschichtigen Textilmaterials (39) des Bekleidungsstücks (1) verläuft.

7. System zur Übertragung und Verarbeitung eines Informationssignals (5) mit einer in und/oder an einem Bekleidungsstück (1) nach einem der Ansprüche 1 bis 6 angebrachten ersten Kommunikationseinheit (3), mit einer ortsfern in einer Leitstelle (2) angeordneten zweiten Kommunikationseinheit (4) und mit einer Funkschnittstelle (31) zur Übertragung des Informationssignals (5) von der ersten Kommunikationseinheit (3) zu der zweiten Kommunikationseinheit (4), wobei die erste Kommunikationseinheit (3) einen passiven Transponder mit einem Mikrokontroller (20) und einer Antenne (21) aufweist, und wobei in dem Mikrokontroller (20) eine Steuereinheit (29) mit einer Totmannsignalansteuerung (30) integriert ist.

## Claims

1. A garment for rescue workers (7), comprising a first communication unit (3) which is fitted in and/or on the garment (1) and is intended for providing an information signal (5), wherein an energy conversion unit (13) which converts mechanical energy into electrical energy in order to supply the first communication unit (3) is placed in and/or on the garment (1); the energy conversion unit (13) has a kinetic energy converter (16) in order to convert the mechanical energy into the electrical energy; the kinetic energy converter (16) is located in a bending region (11) of the garment (1) such that the mechanical energy is generated as a result of movement of a portion (17, 18) of the garment (1) containing the bending region (11); the kinetic energy converter (16) is located in a region of an arm bend or a leg bend such that the mechanical energy required for conversion into the electrical energy can be generated by bending of the arm or the leg of the rescue worker in the garment; and the first communication unit (3) has a control unit (29) comprising a dead man's signal controller (30), by means of which the information signal (5) is configured as a dead man's signal and is transmitted from the antenna (21) via a radio interface (31) to a remotely located second communication unit (4) of a control center (2), the dead man's signal (5) being generated when the power supply signal (19) generated by the movement of the arm bends (11) or leg bends exceeds a threshold saved in the control unit (26).

2. The garment according to Claim 1, **characterized in that** the energy conversion unit (13) is assigned a sensor unit (15) in order to detect a physical variable, the sensor unit (15) having at least one surroundings sensor (23, 24) for detecting state parameters regarding surroundings of the garment (1), and **in that** the sensor unit (15) is powered by a power supply signal (19) generated by the energy conversion unit (13).

3. The garment according to Claim 1 or 2, **characterized in that** neither the energy conversion unit (13) nor the first communication unit (3) has a battery or a rechargeable battery as an electrical energy storage device.

4. The garment according to any of Claims 1 to 3, **characterized in that** the energy conversion unit (13) and/or the control unit (26) and/or the first communication unit (3) has an temporary electrical storage device, by means of which auxiliary electrical energy is provided for a temporary outage of the energy converter (16, 27, 28).

5. The garment according to Claim 4, **characterized in that** the temporary electrical storage device is designed as a capacitor.

6. The garment according to any one of Claims 1 to 5, **characterized in that** the energy conversion unit (13) and/or the first communication unit (3) and/or the sensor unit (15) and/or the control unit (26) is fitted on a textile support layer (38) of the garment (1), the textile support layer (38) extending on a surface (14) and/or within a multi-layer textile material (39) of the garment (1).

7. A system for transmitting and processing an information signal (5), comprising: a first communication unit (3) which is fitted in and/or on the garment (1) according to any one of Claims 1 to 6; a second communication unit (4) which is remotely located in a control center (2); and a radio interface (31) for transmitting the information signal (5) from the first communication unit (3) to the second communication unit (4), wherein the first communication unit (3) has a passive transponder comprising a microcontroller (20) and an antenna (21), and a control unit (29) having a dead man's signal controller (30) is integrated in the microcontroller (20).

## Revendications

1. Vêtement pour sauveteurs (7), doté d'une première unité de communication (3) fixée dans et/ou sur le vêtement (1) et destinée à fournir un signal d'information (5), une unité de conversion d'énergie (13) étant agencée sur le vêtement (1), laquelle convertit de l'énergie mécanique en énergie électrique pour alimenter la première unité de communication (3), l'unité de conversion d'énergie (13) présentant un convertisseur d'énergie cinétique (16) destiné à convertir l'énergie mécanique en énergie électrique, le convertisseur d'énergie cinétique (16) étant agencé dans une zone de flexion (11) du vêtement (1) de telle sorte que l'énergie mécanique est générée par un mouvement d'une partie (17, 18) du vêtement (1) contenant la zone de flexion (11), le convertisseur d'énergie cinétique (16) étant agencé dans une zone de pli du bras ou de pli de la jambe, de telle sorte que l'énergie mécanique nécessaire pour la conversion en énergie électrique peut être générée par la flexion du bras ou de la jambe du sauveteur portant le vêtement, et la première unité de communication (3) présentant une unité de commande (29) dotée d'une commande de signal homme mort (30) au moyen de laquelle le signal d'information (5) est réalisé sous la forme d'un signal homme mort et est transmis par l'antenne (21), par le biais d'une interface radio (31), à une seconde unité de communication (4), agencée à distance, d'un poste de direction (2), le signal homme mort (5) étant généré quand le signal d'alimentation en courant (19) généré par le mouvement du pli du bras (11) ou du pli de la jambe dépasse une valeur seuil enregistrée dans l'unité de commande (26).

2. Vêtement selon la revendication 1, **caractérisé en ce qu'**une unité de détection (15), destinée à détecter une grandeur physique, est associée à l'unité de conversion d'énergie (13), l'unité de détection (15) présentant au moins un capteur d'environnement (23, 24) destiné à détecter des paramètres d'état d'un environnement du vêtement (1) et **en ce que** l'unité de détection (15) est alimentée par un signal d'alimentation en courant (19) généré par l'unité de conversion d'énergie (13).

3. Vêtement selon la revendication 1 ou 2, **caractérisé en ce que** ni l'unité de conversion d'énergie (13) ni la première unité de communication (3) ne présente une pile ou un accumulateur comme accumulateur d'énergie électrique.

4. Vêtement selon l'une quelconque des revendications 1 à 3, **caractérisé en ce que** l'unité de conversion d'énergie (13) et/ou l'unité de commande (26) et/ou la première unité de communication (3) présentent un accumulateur électrique intermédiaire au moyen duquel une énergie électrique auxiliaire est fournie pour une panne temporaire du convertisseur d'énergie (16, 27, 28).

5. Vêtement selon la revendication 4, **caractérisé en ce que** l'accumulateur électrique intermédiaire est réalisé sous la forme d'un condensateur.

6. Vêtement selon l'une quelconque des revendications 1 à 5, **caractérisé en ce que** l'unité de conversion d'énergie (13) et/ou la première unité de communication (3) et/ou l'unité de détection (15) et/ou l'unité de commande (26) sont fixées sur une couche de support textile (38) du vêtement (1), la couche de support textile (38) s'étendant sur une surface (14) et/ou à l'intérieur d'un matériau textile (39) multicouche du vêtement (1).

7. Système de transmission et de traitement d'un signal d'information (5) doté d'une première unité de communication (3) fixée dans et/ou sur un vêtement (1) selon l'une quelconque des revendications 1 à 6, d'une seconde unité de communication (4) agencée dans un poste de direction (2) à distance et d'une interface radio (31) destinée à transmettre le signal d'information (5) de la première unité de communication (3) à la seconde unité de communication (4), la première unité de communication (3) présentant un transpondeur passif doté d'un microcontrôleur (20) et d'une antenne (21), et une unité de commande (29) dotée d'une commande de signal homme mort (30) étant intégrée dans le microcontrôleur (20).
